Europäisches Patentamt

European Patent Office

Office européen des brevets

(11) Publication number: **0 426 966 A2**

# EUROPEAN PATENT APPLICATION

(21) Application number: 90117074.6

(22) Date of filing: 05.09.90

(51) Int. Cl.⁵: **G08B 3/10, H04Q 7/02**

(30) Priority: 09.11.89 JP 289865/89

(43) Date of publication of application:
15.05.91 Bulletin 91/20

(84) Designated Contracting States:
DE FR GB

(71) Applicant: **PIONEER ELECTRONIC CORPORATION**
**No. 4-1, Meguro 1-chome**
**Meguro-ku Tokyo 153(JP)**

(72) Inventor: **Inada, Yoshimichi, c/o Pioneer Electronic Corp.**
**Ohmori Kojo, 15-5, Ohmori Nishi 4-chome**
**Ohta-Ku, Tokyo 143(JP)**

(74) Representative: **Reinhard, Skuhra, Weise**
**Friedrichstrasse 31**
**W-8000 München 40(DE)**

(54) Radio pager and radio pager system.

(57) A radio pager and a radio pager system using a separate TV set for additional message display. An output means of the pager outputs message information to the outside from its message storing means for visual or audio reproduction on a suitable device such as the TV. Used in combination with the separate device to constitute a pager system, the pager need not be equipped with a bulky screen. This allows the pager to display long messages at one time on a large separate screen without suffering from a heavy or large pager construction, shortened battery life or complicated circuit designs.

FIG. 1

# RADIO PAGER AND RADIO PAGER SYSTEM

## BACKGROUND OF THE INVENTION:

### Field of the Invention:

The present invention relates to a radio pager and a radio pager system capable of receiving message information simultaneously when paged by radio and of displaying it on a screen.

### Description of the Prior Art:

One type of prior art radio pager informs the user of his being called by the sound of a buzzer or horn when the pager's number is called by radio. Such a call is generally transmitted and received as follows. Radio stations are attached to the exchanges that handle such pagers. When the telephone number, i.e., call number of the pager is dialed, the call is transmitted by way of one such radio station and is received by the pager which then alerts its owner to the call. A more recent type of prior art radio pager has the ability to receive message information simultaneously when called, the received message appearing on an attached display. This message- displaying radio pager not only alerts the user to the call but also permits a useful visual confirmation of such information as who is calling and where the call is originating. One disadvantage of the displaying function attached to this prior art radio pager is that, the display part can display only one line of a fairly short message.

One proposed solution to the problem of the limited message space is to integrate a radio pager with a portable TV set so that a long message may be displayed at one time on the TV screen.

A disadvantage of the above solution is that the TV-equipped radio pager is bulkier in size and heavier than the conventional radio pager. Other disadvantages of the solution include a shorter battery life and more complicated circuit configurations leading to further problems.

## SUMMARY OF THE INVENTION:

It is therefore an object of the present invention to provide a radio pager and a radio pager system capable of informing the user of long messages when called, while overcoming the above and other deficiencies and disadvantages of the prior art including the heavier and bulkier construction, shorter battery life and complicated circuit designs.

In achieving the foregoing and other objects of the present invention and according to one aspect there of, there is provided a radio pager comprising a radio signal receiving means for receiving a call number and a modulated signal containing message information and for demodulating the signal; a call number storing means for storing a prescribed call number of the pager; a reception controlling means for acquiring the received message information if the received call number is judged to be the same as the prescribed call number stored in the call number storing means; a message storing means for storing the message information acquired by the reception controlling means; a display means; a means for causing the displaying means to display the message information stored in the message storing means; and an output means for outputting to the outside the message information stored in the message storing means.

According to another aspect of the present invention, there is provided a radio pager system comprising the radio pager and a television set which receives the message information output by the radio pager via the output means and which displays the information on a screen incorporated in the set.

In the construction above, the radio pager has the output means in particular for outputting to the outside the message information stored in the message storing means. The message output via the output means may be received and then displayed and/or sounded by a suitable apparatus. There is no need to have the radio pager integrated with a display means containing a bulky screen. Instead, the radio pager may be used more conveniently in combination with a separate TV set.

## BRIEF DESCRIPTION OF THE DRAWINGS:

Fig. 1 is a perspective view of the radio pager embodying the present invention;

Fig. 2 is a block diagram of the internal circuits constituting the radio pager;

Fig. 3 is a set of views depicting a typical data configuration according to what is known as the POCSAG method;

Fig. 4 is a block diagram showing in more detail some of the circuits in Fig. 2;

Fig. 5 is a view illustrating the internal construction of the message memory shown in Fig. 2;

Fig. 6 is a flowchart depicting how the circuits in Fig. 4 operate, along with a timing chart describing the timings relevant to some aspects of the operation;

Fig. 7 is a flowchart describing how the CPU of the radio pager operates;

Figs. 8 and 9 are flowcharts showing in more detail part of the steps in Fig. 7;

Fig. 10 is a set of views of display examples appearing on an LCD panel of the radio pager;

Fig. 11 is a flowchart describing in more detail part of the steps in Fig. 7;

Figs. 12 through 15 are views illustrating how data transfer is implemented with the radio pager; and

Figs. 16 through 19 are views of a radio pager system constituted by use of the radio pager according to the invention.

## DESCRIPTION OF THE PREFERRED EMBODIMENT:

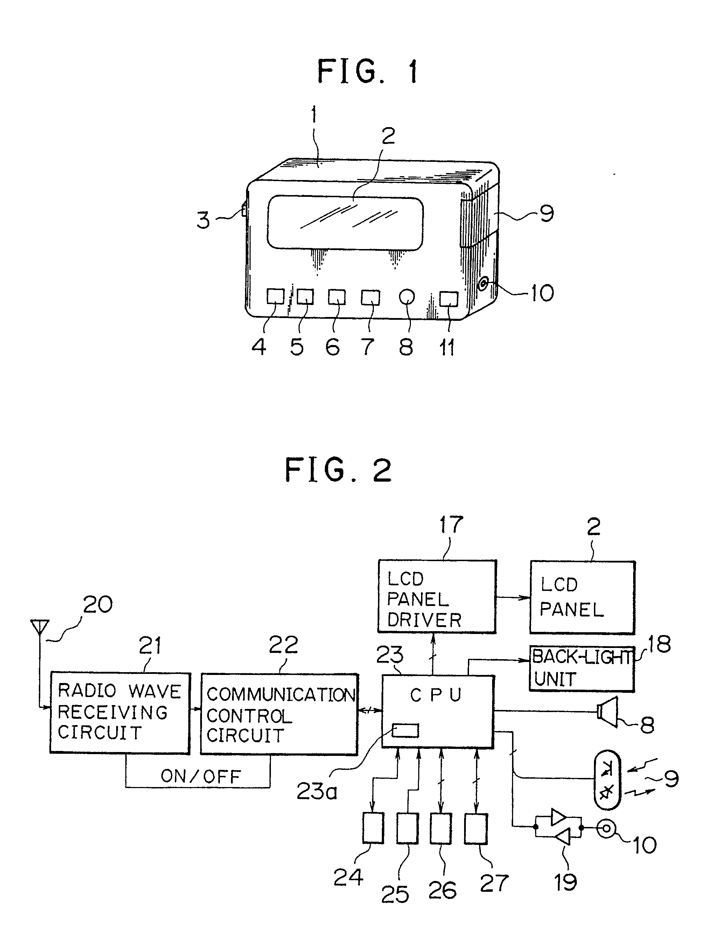

A preferred embodiment of the present invention will now be described by referring to the accompanying drawings. Fig. 1 shows in perspective an external view of the radio pager embodying the invention. In Fig. 1, an LCD panel 2 is provided at the front of a case 1. On the left side of the case 1 is a main switch 3 for turning on and off the radio pager function. The front of the case 1 contains a RESET key 4, a LIGHT key 5, a MESSAGE key 6, a CLEAR key 7, a speaker 8 and a mode switching key 11. The light-hand side of the case 1 is equipped with an infrared ray emitting/receiving element 9 and a communication cable connector 10.

The RESET key 4 is used to turn off the alarm after it is activated. The LIGHT key 5 turns on and off the back-light of the LCD panel 2 when operated. The MESSAGE key 6 is used to display message data. When a message display mode is entered by operating the MESSAGE key 6, pushing an up/down key, not shown, causes one message after another to appear on the display panel. The CLEAR key 7 is used to clear the currently displayed message from the LCD panel 2. As will be further described, N messages are stored in a message memory. When the memory is full, reception of each new message causes the oldest message to be erased from the memory.

Referring now to Fig. 2, the electronic circuitry in the case 1 will be described. The LCD panel 2 has an LCD panel driver 17 and a back-light unit 18. A communication cable is connected to the connector 10 via a bi-directional buffer 19. An antenna 20, not shown in Fig. 1, receives a radio wave transmitted by a radio station of the exchange. The radio station illustratively uses an FM radio wave of 280 MHz for its output. The radio wave is frequency modulated with an FSK signal (NRZ) and contains information of a bit rate of 512 bits/seconds. The signal received by the antenna 20 is input to a radio wave receiving circuit 21. The radio wave receiving circuit 21 demodulates the FSK signal into a signal of 0's and 1's; the circuit 21 comprises a circuit for selecting the frequency of 280 MHz in addition to the demodulating circuit. The demodulated signal is output to a communication control circuit 22. This embodiment operates on what is known as the POCSAG method whose details will be described later. The communication control circuit 22 performs data processing according to the POCSAG method. That is, the circuit 20 analyzes the received data based on the POCSAG method and checks to see if the correct call number of the pager is contained. If the call number is correct, an acquire received data command is output to a CPU 23, telling the CPU to acquire the received data. The CPU 23 is connected with a function buffer 24, a key input unit 25, a message memory 26 and a display buffer 27. The CPU 23 detects and processes a signal from the key input unit 25, stores the above-mentioned received data in the message memory 26, reads the stored data in accordance with the operation of the MESSAGE key 6, places the retrieved data in the display buffer 27, and activates the speaker 8 to inform the user of the paging call. A control register 23a is also provided.

The LCD panel driver 17 drives the LCD panel 2 based on the message coming from the CPU 23. The LCD panel 2 is back-lighted by the back-light unit 18 under control of the CPU 23.

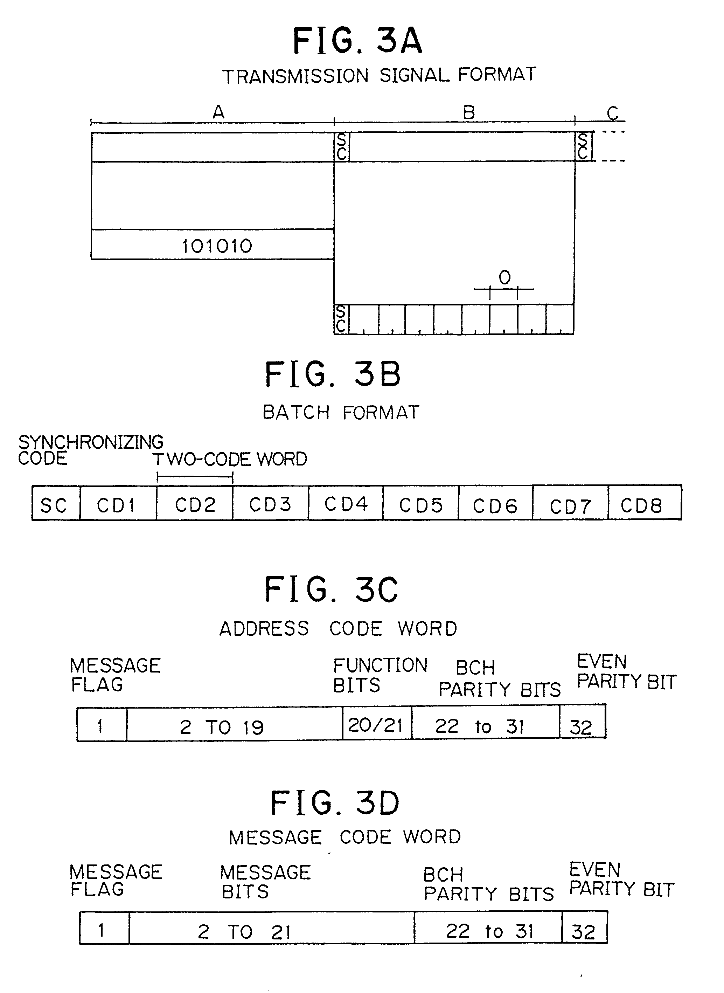

Figs. 3A through 3F are views showing the representative data configuration according to the POCSAG method. Fig. 3A illustrates a complete communication signal format made up of a preamble signal A containing the first 576 bits of alternating 0's and 1's, followed by a plurality of batch signals B, C, etc. The preamble signal A notifies the radio pager of the upcoming data transmission so that the latter may properly synchronize its operation in receiving the data. The communication control circuit 22 detects the preamble signal and recognizes that batch data will follow the signal.

Fig. 3B shows a batch format in which the batch data is transmitted. This format is constituted by a synchronizing code SC followed by a plurality of two-word codes.

Figs. 3C and 3D depict how the above two-word codes are typically configured. Fig. 3C shows an address code word that begins with a message flag, followed by an address code, function bits, BCH parity bits and an even parity bit, in that order.

The message flag indicates whether the next code is an address code or a message code. When the flag is 0, an address code word follows; when the flag is 1, a message code word follows. Bits 2 through 19 following the message flag constitute an address code that corresponds to the call number. Two function bits follow the address code. These function bits indicate the type of display or sound emission to be made by the radio pager. Four functions are illustratively available, represented by bits "00," "01," "10" and "11." In a POCSAG setup, an error may occur in, say, an address code. This is often the case when a bad signal reception keeps the FSK signal from getting appropriately demodulated. This error is corrected by 10-bit data, i.e., the BCH parity bits 22 through 31. Behind the BCH parity bits is an even parity bit 32. This even parity bit represents an even number of 1's from beginning to end of the data. Whether a bit has dropped in or dropped out is detected by checking the even parity bit.

Fig. 3D shows a message code word containing message bits following the message flag. The message bits constitute a message from the person who originated the call, the message typically being a telephone number plus some other relevant formation. The message flag and message bits are supplemented by the even parity bit to make up the message code word.

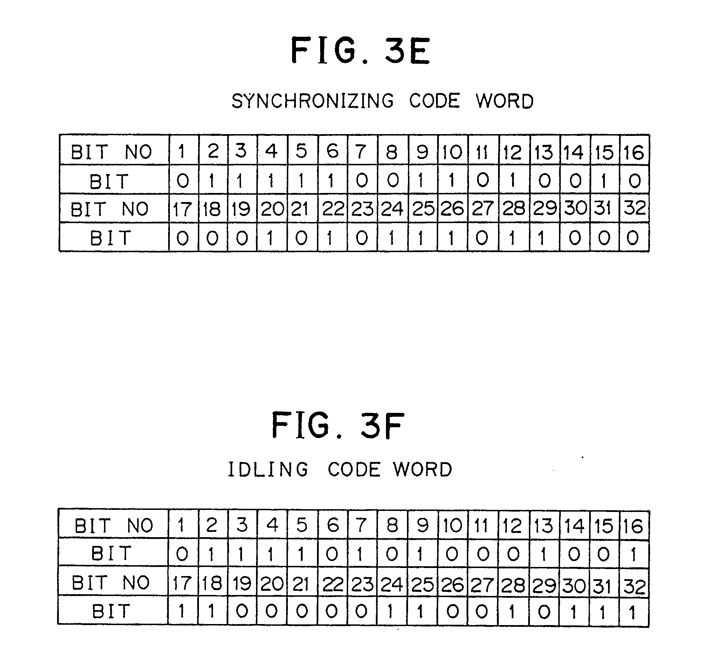

With the POCSAG method, the radio wave receiving circuit 21 does not remain turned on but is powered only when necessary. Each radio pager is assigned one of the blocks CD1 through CD8 in a single batch. A synchronizing code word is the signal by which to detect the position of the assigned block. The radio pager is powered during the period of the synchronizing code word and of the assigned block. The preamble signal is intended to provide synchronization. If synchronization is not obtained, the pager is also activated to receive the preamble signal for synchronization. Fig. 3E depicts the bit configuration of a synchronizing code word, the configuration comprising "011111001101001000010101111011000." Upon receipt of a signal of this bit configuration, the radio wave receiving circuit 21 receives one of the blocks following the bits during the time period assigned to the radio pager. The radio pager illustratively enters receiving mode every time a synchronizing code comes in. When the synchronizing code is detected, the radio wave receiving circuit 21 is again powered during the period of, say, CD2 in the code word of the assigned block in Fig. 3B. A check is made to see if the address data of the received code word such as that of Fig. 3C is directed to this radio pager. If the address data is directed to some other pager, power is turned off.

If the address data matches the radio pager, the next message code word is also received and the data thereof acquired. The radio pager applies power to the radio wave receiving circuit 21 when the synchronizing code is received and when the code word of the assigned block comes in. In other words, the radio pager always turns on the radio wave receiving circuit 21 in response to the synchronizing code and to the assigned block in units of batch words. When the radio pager is powered for the first time, its overall synchronization has yet to be achieved. Thus the radio wave receiving circuit 21 is powered synchronously to detect the preamble signal. The POCSAG method described above may be summed up as follows. After a preamble signal is detected, the radio wave receiving circuit 21 is powered both when a synchronizing code is received and when the assigned code word is received.

The above-described operations are controlled by the communication control circuit 22. Under power on-off control of the circuit 22, the radio wave receiving circuit 21 performs its signal receiving function. For example, where the overall synchronization is achieved after detection of a preamble signal, the communication control circuit 22 turns on the radio wave receiving circuit 21 in response to the subsequent synchronizing code as well as to the assigned block among the blocks CD1 through CD8.

With the POCSAG method, the code word is supplemented by another word called an idling code word. Fig. 3F shows the representative bit configuration of one such idling code word. This word is a null code which, when received, leaves the radio pager in the same state as when no data is received. For example, the idling code word may exist in the position of the synchronizing code word. If that idling code word is received, an out-of-step state occurs. If the idling code word is found in an address code word or in a message code word, the radio pager remains in the same state as upon receipt of no data.

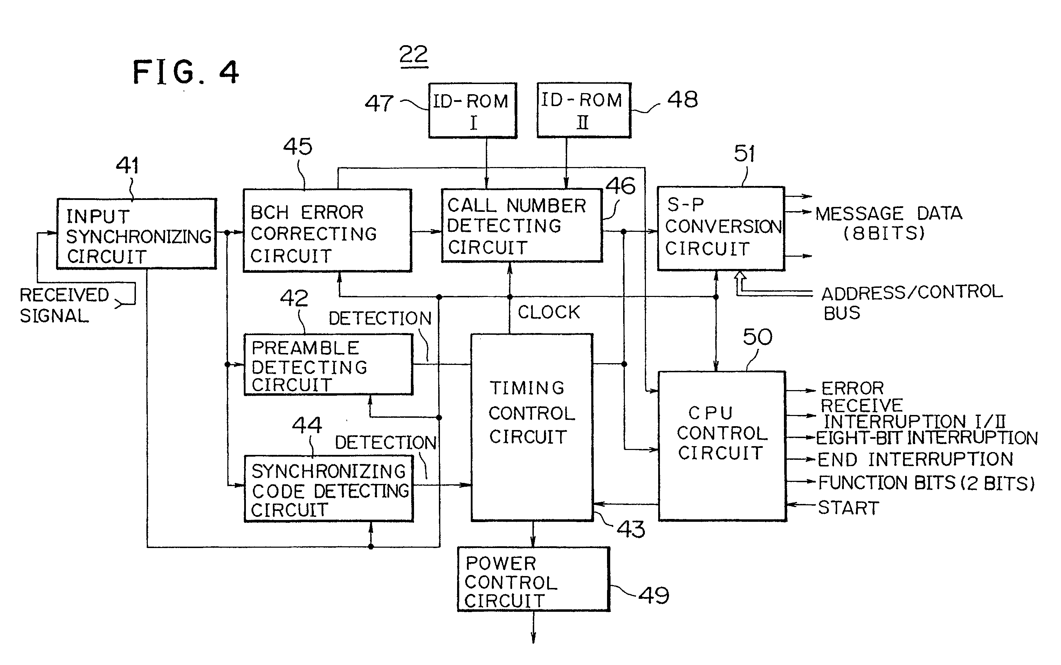

The major parts in Fig. 2 will now be described in detail. A detailed circuit configuration of the communication control circuit 22 is shown in Fig. 4. A received signal coming in through the radio wave receiving circuit 21 enters an input synchronizing circuit 41. The input synchronizing circuit 41 corrects a disruption, if any, in the arrangement of 0's and 1's constituting the demodulated FSK signal. The circuit 41 permits acquisition of stabilized data. The signal acquired by the input synchronizing circuit 41 is forwarded to a BCH error correcting circuit 45, a preamble detecting circuit 42 and a synchronizing code detecting circuit 44. As its name implies, the preamble detecting circuit 42 detects a preamble signal and sends it to a timing control circuit 43. After detection of the preamble signal by the preamble detecting circuit 42, the synchronizing code detecting circuit 44 becomes active, checks to see if a synchronizing code has come in, and outputs a signal reflecting the result of the check to the timing control circuit 43. The BCH error correcting circuit 45 reads all data of the assigned block in the batch format, checks to see if any BCH error is contained therein, and corrects any such error that may be detected.

When the address code is received, the BCH error detecting circuit 45 inputs an error correction complete code to a call number detecting circuit 46. The call number detecting circuit 46 is connected with an ID-ROM I 47 and an ID-ROM II 48 containing ID numbers. By comparing the data of the corrected code with the contents of the respective ID-ROMs, the call number detecting circuit 46 checks to see if there is a match therebetween. The timing control circuit 43 has a clock that keeps detecting the timing of synchron`izing codes. Since the transmitting side transmits a preamble signal, a batch format and a plurality of batch data, in that order, the timing control circuit 43 turns on a power control circuit 49 upon detecting the preamble signal and keeps the circuit 49 active until a synchronizing code is detected. The timing control circuit 43 also activates the power control circuit 49 in response to the code word of the block assigned to the radio pager. With a power-on signal coming in from the power control circuit 49, the synchronizing code detecting circuit 44 detects the synchronizing code. The BCH error correcting circuit 45 corrects the received data and inputs the corrected data to the call number detecting circuit 46. The call number detecting circuit 46 checks to see if the call is directed to this radio pager or to some other pager. If the call number does not belong to this radio pager, the call number detecting circuit 46 discontinues its operation and is again on the lookout for a code word.

If the call number is found to be that of this radio pager, a receive interrupt signal is generated to interrupt the operation of the CPU 23 in Fig. 2. The call number detecting circitit 46 applies its signal to a CPU control circuit 50. Upon receipt of the signal indicating that the correct call number is received, the CPU control circitit 50 outputs the receive interrupt signal to the CPU 23. In turn, the CPU 23 carries out processing, that will be described below.

The data that is to be received later or is being received is first stored in the BCH error correcting circuit 45. Then the stored data is input to an S/P (serial to parallel) conversion circuit 51 via the call number detecting circuit 46. The S/P conversion circuit 51 converts single bit data in serial format into units of parallel eight bits for transfer to the CPU 23. The circuit 51 is connected to an address/control bus and a data bits of the CPU 23, as will be further described later. In response to an eight-bit interrupt signal output by the CPU control circuit 50, the CPU 23 acquires the eight-bit data.

After receipt of all data, the CPU control circuit 50 outputs an end interrupt signal. The received signal is handled in units of eight bits. Two function bits contained in the address code are also output to a buffer it, the CPU 23 under control of the CPU control circuit 50. The message code, divided successively into units of eight bits, is introduced into the CPU 23 as error-corrected message data via the S/ P conversion circuit 51.

The communication control circuit 22 is always active. In keeping with the timing control circuit 43, the communication control circuit 22 turns on and off power via the power control circuit 49 as described above.

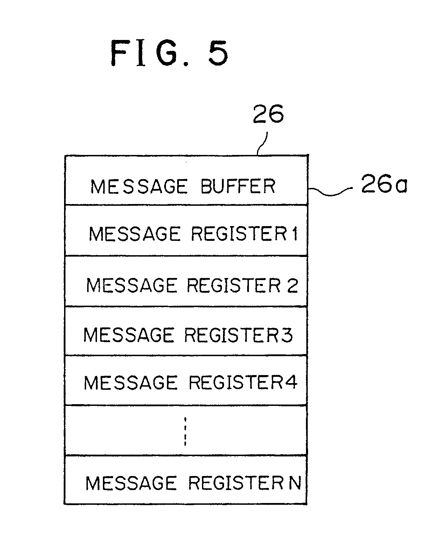

Fig. 5 illustrates in detail the message memory 26 shown in Fig. 2. The message memory 26 comprises a message buffer 26a and message registers 1 through N. A received message is stored temporarily in the message buffer 26a before the message is written to the message register 1. At this time, the data currently in the register 1 is shifted to the message register 2. The data in the last register N is shifted out and deleted. That is, the message memory 26 is a buffer arrangement that works on an FIFO (first-in first-out) basis.

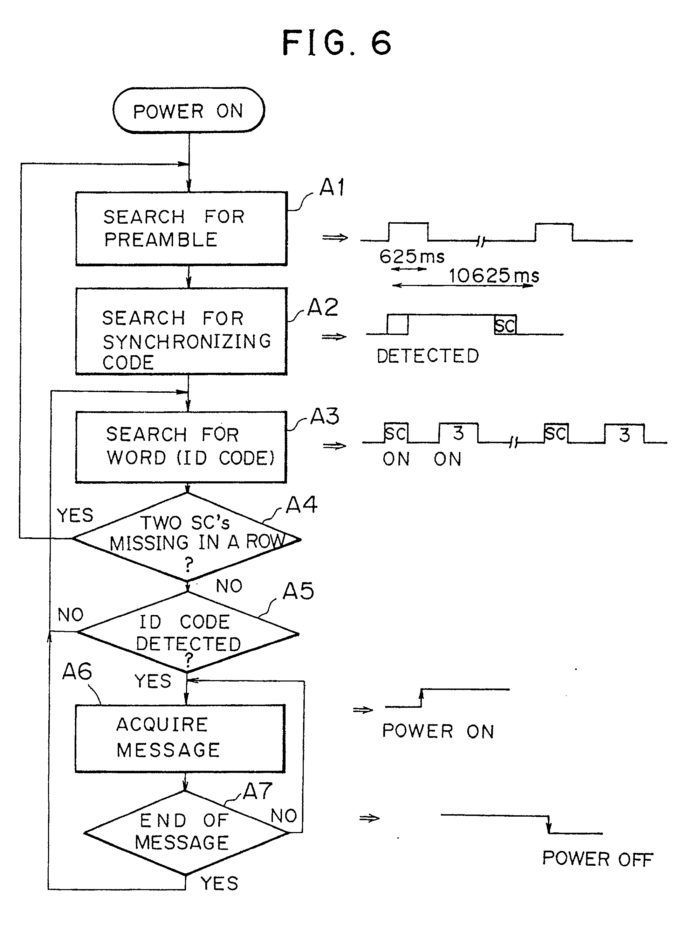

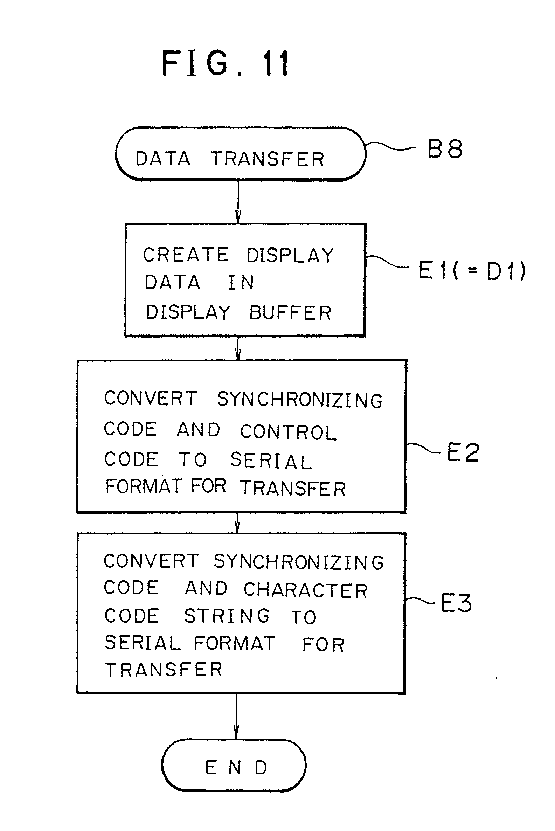

There will now be described how the above-described embodiment of the invention works by reference to the flowcharts in Figs. 6 through 9 and in Fig. 11. When the radio pager is activated, the communication control circuit 22 (detail in Fig. 4) operates as outlined in the flowchart of Fig. 6. Specifically, with power applied to the radio pager, step A1 is entered where a search is made for a preamble signal. The request for the search is issued by the timing control circuit 43. The preamble signal comprises 576 bits. Among these bits, the preamble detecting circuit 42 searches for and detects eight continuous bits "10101010" representing the preamble signal. When the preamble signal is detected, the timing control circuit 43 is notified thereof by a preamble detected signal. In turn, the timing control circuit 43 causes the synchronizing code detecting circuit 44 to start searching for and detect a synchronizing code. A synchronizing code comes immediately behind the preamble signal or, if batch data comes in continuously, appears at the beginning of each batch of data. Where a preamble signal is to be detected for the first time, the timing control circuit 43 activates the synchronizing code detecting circuit 44 immediately after a preamble detected signal is generated. When a synchronizing code is detected by the synchronizing code detecting circuit 44, i.e., when the code is detected in step A2, the data in the block assigned to the radio pager is introduced into the BCH error correcting circuit 45. At this point, the radio wave receiving circuit 21 is already active, as mentioned earlier. After the data of the assigned block is introduced into the circuit 45, the call number detecting circuit 46 is activated, and step A3 is reached. In step A3, a word search is carried out, i.e., a check is made to see if the received code coincides with the contents in the ID-ROM I 47 or ID-ROM II 48. In step A4, a check is made to see if two synchronizing codes are missing in a row. The first synchronizing code may be missing because of noise or other impediments. If two synchronizing codes are consecutively missing, an out-of-step state is recognized. In this case, step A1 is reached again where a search for a preamble signal is resumed.

If only one synchronizing signal is missing or if two synchronizing codes are detected in a row, i.e. , if the result of the check in step A4 is "NO," step A5 is entered where a check is made to see if the matching ID code is detected. If the matching ID code is not detected in step A5, step A3 is reached again where a word search is resumed for the ID code.

If the matching ID code is detected in step A5, step A6 is entered where the message is acquired by the CPU 23, as will be further described later. Serial data from the call number detecting circuit 46 is converted into parallel data in units of eight bits by the S/P conversion circuit 51 for transfer to the CPU 23. When the CPU 23 has acquired all data, i.e., at the end of step A6, step A7 is entered where a check is made to see if the message has come to an end. Specifically, the message flag in the first bit of the message code word is checked. If set to 1, the message flag indicates that more message data follows; if set to 0, the message flag indicates that the message is terminated. As long as the result of the check in step A7 is "NO," step A6 is reached repeatedly where more message data is acquired. As stated, the acquiring of messages is done in units of eight bits. For example, a message made up of 20 bits, bits 2 through 21, is checked in units of eight bits, each check looking for the end of the message. When the message end is detected in step A7, step A3 is again reached where a word search is carried out. If the preamble signal is not detected or is incorrectly detected upon power-up, the resulting out-of-step state leaves two synchronizing codes missing consecutively, in step A4. In this case, step A1 is reached again where another search is made for a preamble signal. During this search, the radio wave receiving circuit 21 is powered for 62.5 msec. to see if a preamble signal is received. If to preamble signal is detected, the radio wave receiving circuit 21 is powered 1062.5 msec. later, and the search for the preamble is again carried out in step A1. Repeating the preamble search process a number of times eventually leads to detection of a preamble signal that precedes batch data.

As indicated, the radio wave receiving circuit 21 is turned on periodically. During the power-on period, a preamble signal is detected. Then with synchronization achieved, the radio pager is powered only during the block assigned thereto so that a check is made to see if the address thereof is detected.

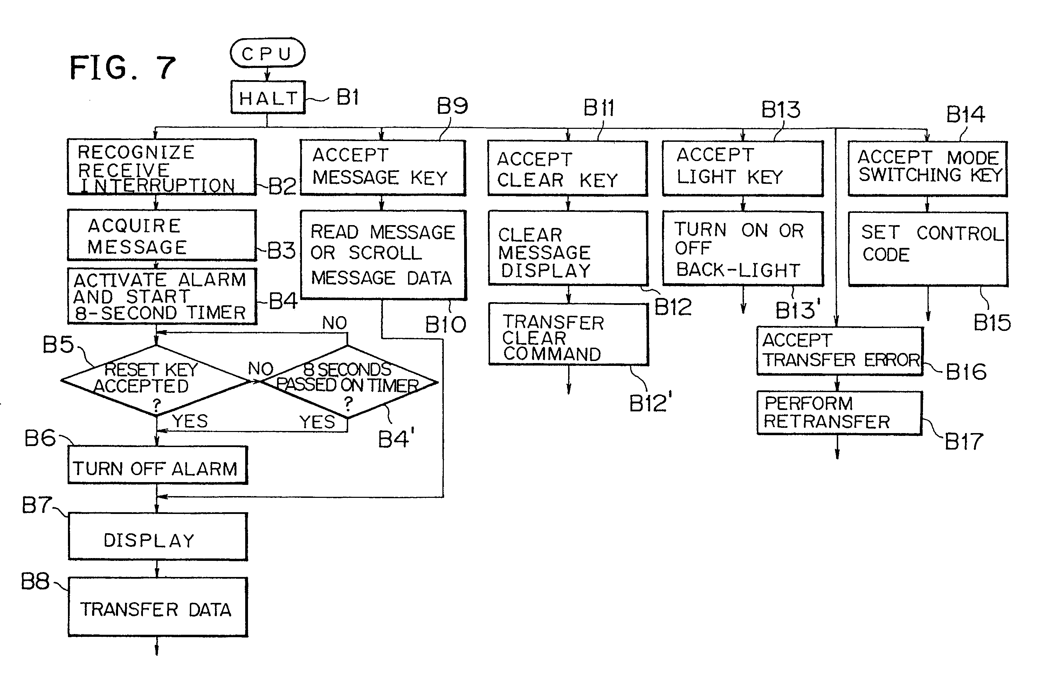

There will now be described how the CPU 23 operates, i.e., how it reacts to various key operations and receive interruptions by reference to the flowchart of Fig. 7. When the radio pager is activated by operating the main switch 3, the CPU 23 enters a halt state of step B1 in Fig. 7. In step B1, the CPU 23 is on the lookout for interruptions by various key inputs from the key input unit 25 as well as for receive interruptions.

When a paging call is received, i.e., when a receive interrupt signal is applied, the CPU 23 enters step B2 where a receive interruption is recognized. In step B3, a message is acquired.

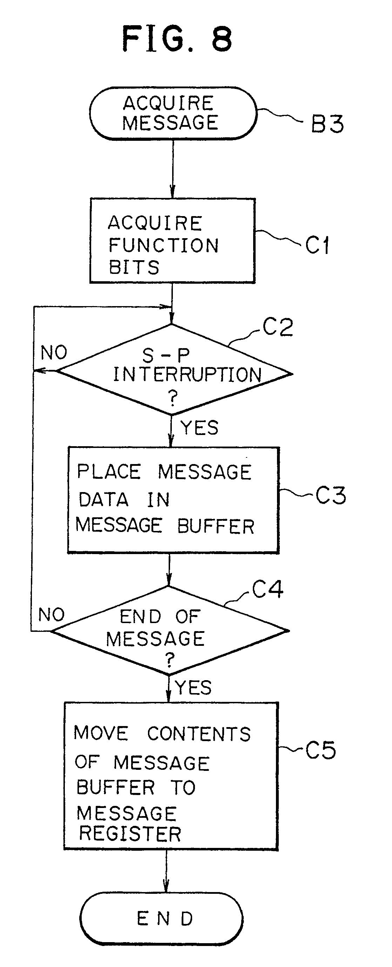

More specifically, the message is acquired in step B3 as depicted in the flowchart of Fig. 8. In step C1, the function bits are placed in the function buffer 24. In step C2, a check is made to see if a serial-parallel (S/P) interruption, i.e., an eight-bit interruption is generated. If there is no such interruption, the CPU 23 waits for an interruption to occur. When an S/P interruption is detected in step C2, eight-bit serial data is converted into eight-bit parallel data by the S/P conversion circuit 51. In step C3, the parallel data is placed in the message buffer 26a within the message memory 26. In step C4, a check is made to see if the end of the message is reached. If the end of the message is yet to be reached, step C3 is restored; if the message end is reached, step C5 is entered. In step C5, the data in the message buffer 26a is stored into the register area of the message memory 26. This completes the process of message acquisition. Thereafter, step B4 of Fig. 7 is reached. In step B4, an alarm is triggered, and the speaker 8 is activated for a predetermined period of, say, eight seconds, notifying the user of the reception of a paging call. The alarm is automatically stopped upon elapse of the eight seconds in step B4$'$ . If it is desired to stop the alarm halfway before it is automatically stopped, the user operates the RESET key 4. The operation of the RESET key 4 activates the process of step B5. In step B6, the alarm is turned off. In step B7, a display process is performed.

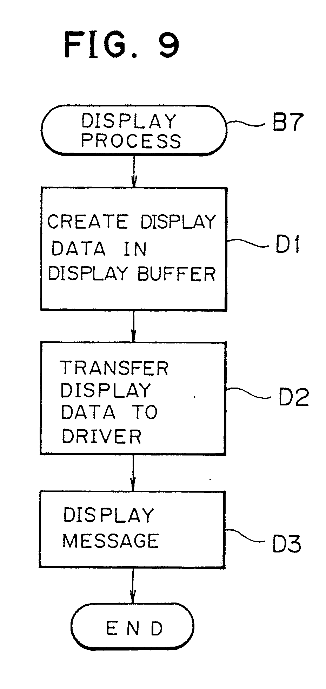

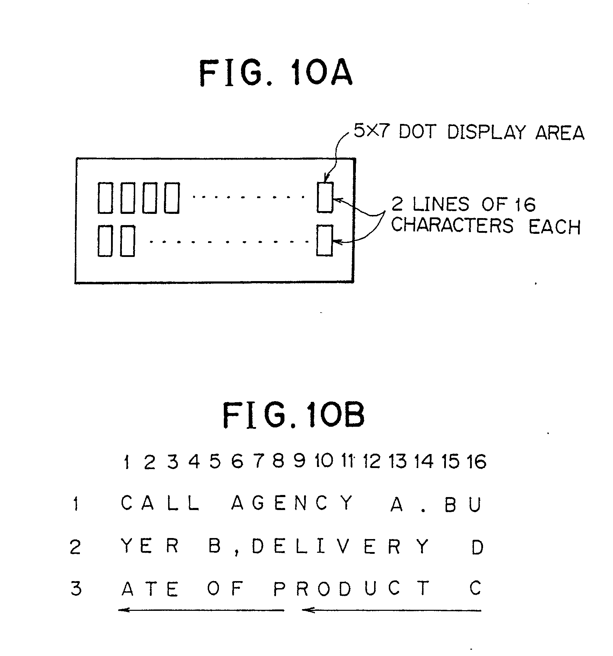

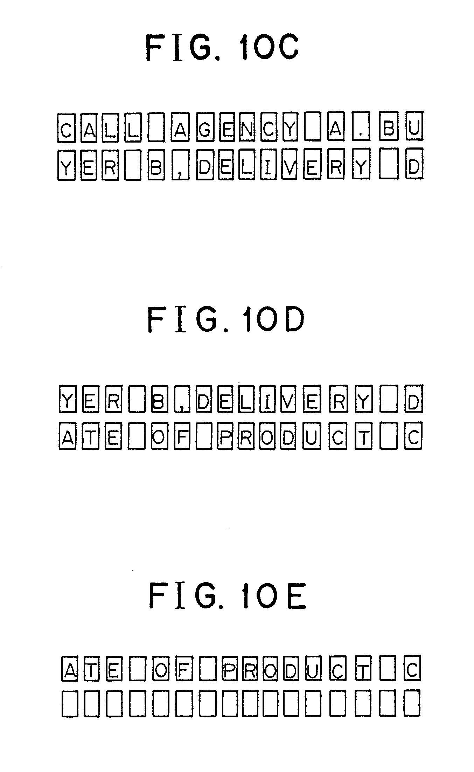

Step B7 is carried out as depicted in the flowchart of Fig. 9. In step D1, display data is created in the display buffer 27. That is, the message data is first read from the message register 1 of the message memory 26. The LCD panel 2 is illustratively made up of two lines of 16 characters each, as shown in Fig. 10A. The message memory 26 typically accommodates up to 40 messages constituted by 1,200 characters, one message comprising up to 500 characters. The message data is written to the display buffer 27 as depicted in Fig. 10B. In step D2, the first and second lines are transferred to the LCD panel driver 17. In step D3, a message display shown in Fig. 10C is obtained. In this example, the entire message is not displayed at one time. This requires carrying out steps D2, D3 and D2 so that the displays of Figs. 10C, 10D and 10E are scrolled manually or automatically on the screen for the user to verify.

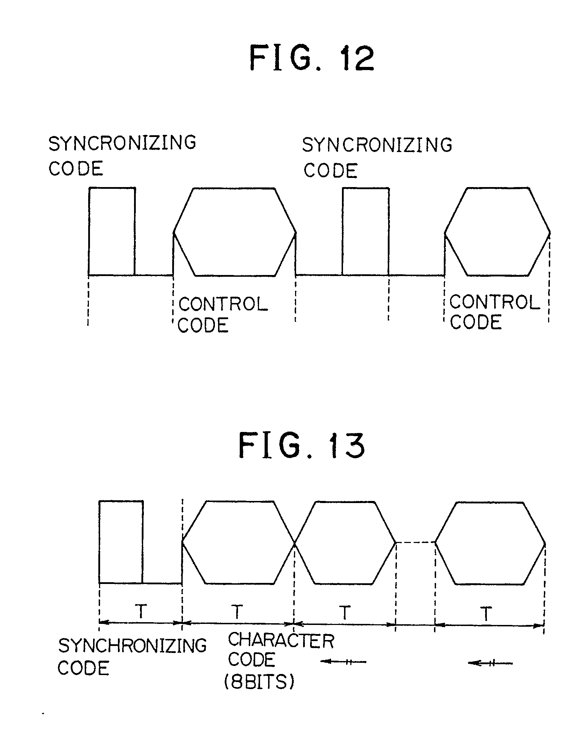

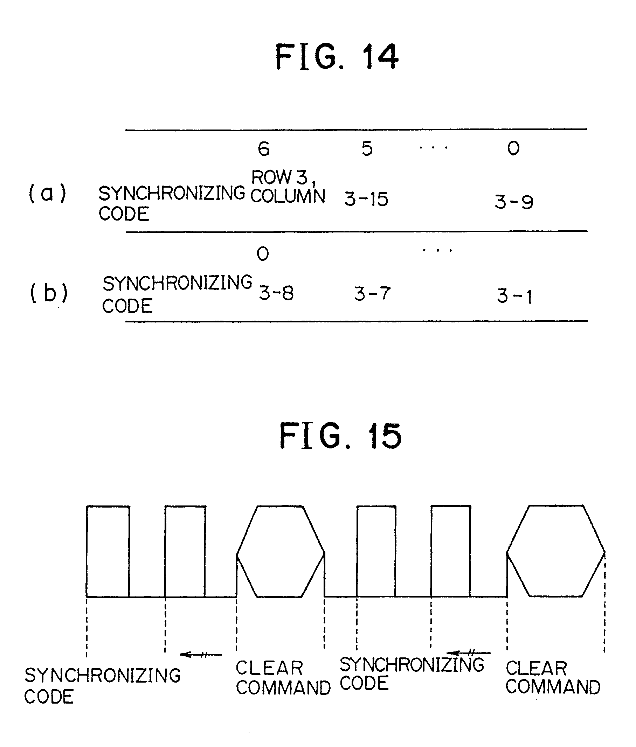

Fig. 11 shows an example of carrying out data transfer. Step E1 may be replaced by the above-described step D1. In step E2, a synchronizing code and a control code, the latter to be described later, are converted to serial format. The serial data is transferred from the infrared ray emitting/receiving element 9, as illustrated in Fig. 12. In step E3, another synchronizing code followed by the last character and on in the display buffer 27 is converted to serial format for transfer from the infrared ray emitting/receiving element 9, as also shown in Fig. 12. The data waveform is depicted in Fig. 13, and the contents of the data are illustrated in Fig. 14A and Fig. 14B, etc. With this example, in order to minimize errors, the data is transferred in units of eight characters (8 bits x 8 = 64 bits). Step E3 is repeated until all data has been transmitted. To minimize transfer errors, each code string may be transferred twice, or an error correction code, not described, may be additionally transferred.

Every time the mode switching key 11 is operated, a control code for receive interruption is accepted in step B14. In step B15, the control code is written to the control register of the CPU 23. For example, repeatedly pushing the mode switching key 11 beginning in the initial mode "00" selects such modes as "00 (character superimpose)," "01 (picture impose)," "10 (interruption display)," "11 (reception report and wait)" and "00" consecutively.

A user who wishes to see messages stored in the message memory by other than the above-described receive interruption operates the MESSAGE key 6. Operating the MESSAGE key 6 initiates the interruption of step B9. In step B10, a message is read from the message memory 26 and is displayed, as in step B7. In this case, the message stored in the message register 1 of the message memory 26 is first read and displayed. To view more messages that may be stored in other message registers requires operating an up/down key, not shown, for display data scroll. That is, the message registers 1 through N in the message memory 26 are specified one by one. The message data is read from each specified register into the display buffer 27. The data is consecutively displayed on the LCD panel 2. With the display established, data transfer then takes place.

A displayed message is deleted by operating the CLEAR key 7. Operating the CLEAR key 7 causes step B11 to be entered where an interruption by the CLEAR key is accepted. In step B12, the message on the screen is cleared. In Step B12', a clear command is transferred from the infrared ray emitting/receiving element 9 as shown in Fig. 15.

The LCD panel 2 has the back-light unit 18 which is turned on and off by operating the LIGHT key 5. Operating the LIGHT key 5 causes the step B13 to be entered where an interruption by the LIGHT key 5 is accepted. In step B13', the back-light unit 18 is turned on or off.

If a signal comes in from the destination of data transfer via the infrared ray emitting/receiving element 9 indicating the presence of a transfer error, a transfer error interruption is accepted in step B16. In step B17, a retransfer process is carried out depending on, the error mode in effect

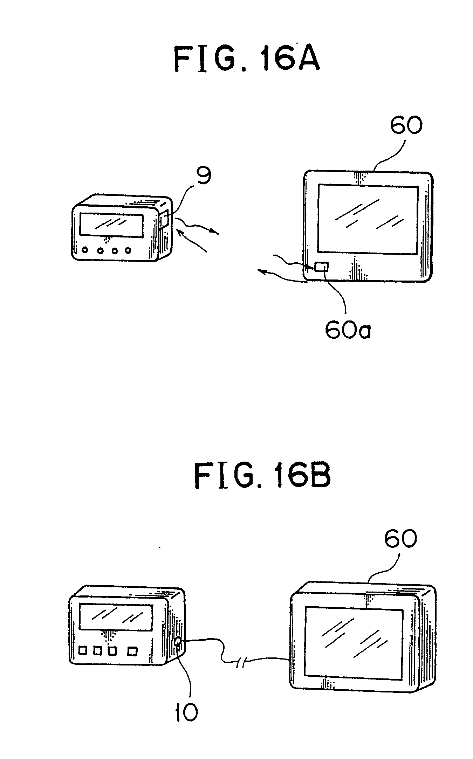

In the construction described above, the radio pager may transfer messages via its infrared ray emitting/receiving element 9 to an on-board vehicle TV set 60 by way of another infrared ray emitting/receiving element 60a attached to the TV set, as depicted in Fig. 16A. On the screen of the TV set 60, the messages may be displayed in any of the modes established by the mode switching key 11 (character superimpose, picture impose, interruption display). Fig. 16B shows an example in which messages are transferred by use of the communication cable connector 10.

In order to display messages in the character superimpose, picture impose or interruption display mode, the TV set 60 incorporates a decoder by which to decode the information transferred from the radio pager and a memory in which to store the decoded information.

In the example above, the destination of messages transferred from the radio pager is an on-board vehicle TV set. Alternative destinations of the transferred messages include car stereo equipment and a personal computer. The car stereo, incapable of visually expressing a message, turns it into an audio signal for reproduction by the amplifier and speakers thereof. An advantage of this variation is that the message can be heard louder and more clearly on the stereo than on the speaker 8 of the pager. The personal computer is used much like the TV set, with its CRT displaying the transferred message.

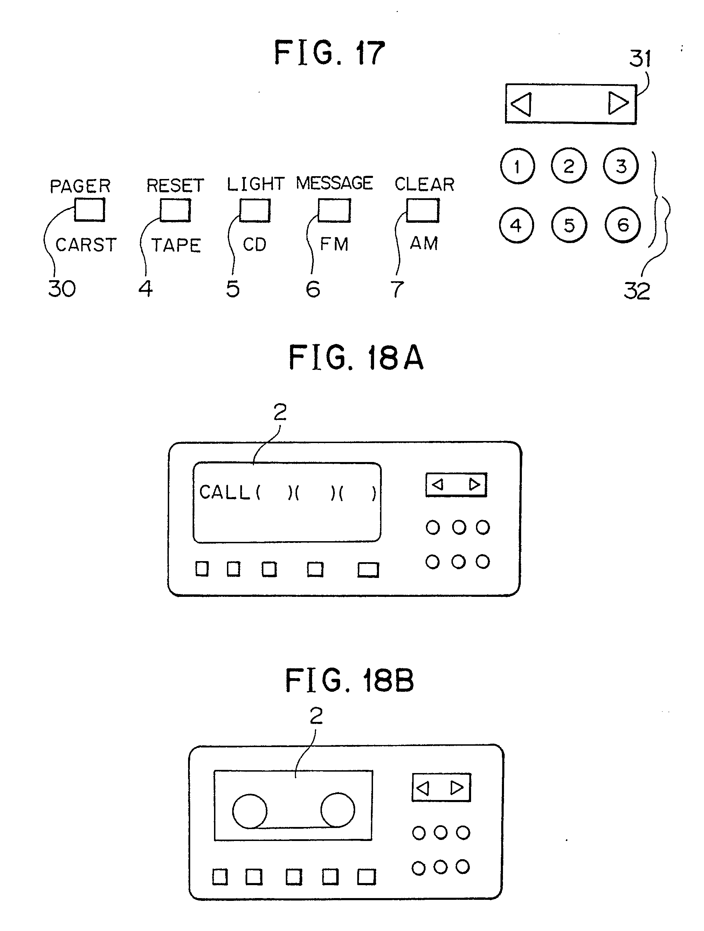

As indicated, the radio pager may be used in combination with on-board vehicle audio equipment, i.e., a car stereo set. In this case, the controls of the car stereo are attached to the radio pager so that the latter may be used as a remote controller of the stereo. More specifically, as shown in Fig. 17, the car stereo and the radio pager are functionally switched by a function selector key 30 that may be set to CARST (car stereo) or to PAGER (radio pager). When the car stereo function is selected, the RESET key 4 acts as a TAPE function key, the LIGHT key 5 as a CD function key, the MESSAGE key 6 as an FM function key, and the CLEAR key 8 as an AM function key. Furthermore, an up/down key 31 and a ten-key pad are added so that the remote controller has capabilities equivalent to those of conventional controllers of the same kind.

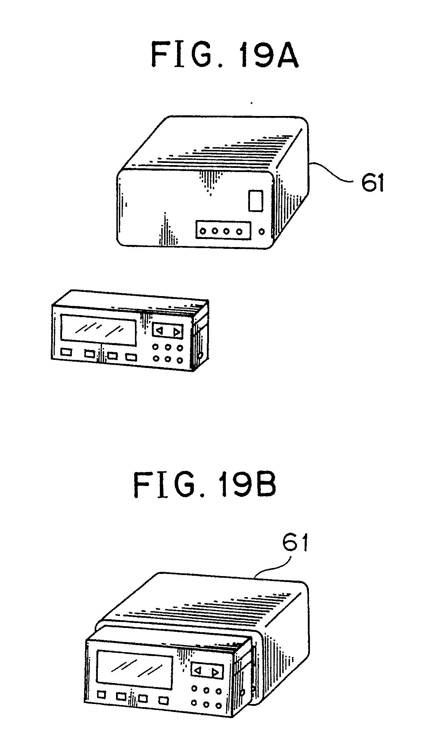

With these keys incorporated, the LCD panel 2 may provide an indication of the remaining tape, as illustrated in Fig. 18B, in addition to the message display of Fig. 18A. Furthermore, the radio pager equipped with various keys as shown in Fig. 17 may be illustratively used as an operating device removably mounted on a magazine-type CD controller 61 for the operation thereof, as depicted in Figs. 19A and 19B.

Where the radio pager is used as a remote controller of other equipment, the pager uses an output means comprising a light-emitting element that outputs the pager's call number on a light signal to the other equipment. Only when the call number from the equipment matches the pager's call number can the pager be used as a remote controller of the equipment. This feature contributes to discouraging the criminal intention of stealing the on-board vehicle equipment.

As described, the radio pager according to the invention outputs message information from its message storing means through its output means to the outside. The message output through the output means is received by another device for visual or audio reproduction. There is no need for the pager to have a display means made up of a bulky screen. Instead, the pager is used in combination with a separate TV set to make up a pager system. Thus the pager displays long messages at one time on a large separate screen without suffering from a large or heavy pager construction, shortened battery life or complicated circuit designs.

It is to be understood that while the invention has been described in conjunction with a specific embodiment, it is evident that many alternatives, modifications and variations will become apparent to those skilled in the art in light of the foregoing description. Accordingly, it is intended that the present invention embrace all such alternatives, modifications and variations as fall within the spirit and scope of the appended claims.

## Claims

1. A radio pager comprising:
a radio signal receiving means for receiving a call number and a modulated signal containing message information and for demodulating said signal;
a call number storing means for storing a prescribed call number of said pager;
a reception controlling means for acquiring said received message information if said received call number is judged to be the same as said prescribed call number stored in said call number storing means;
a message storing means for storing said message information acquired by said reception controlling means;
a display means;
a means for causing said displaying means to display said message information stored in said message storing means; and
an output means for outputting to the outside said message in formation stored in said message storing means.

2. A radio pager system according to claim 1, further including a television set which receives said message information output by said pager via said output means and which displays said information on a screen incorporated in said set.

# FIG. 1

# FIG. 2

# FIG. 3A

## TRANSMISSION SIGNAL FORMAT

101010

# FIG. 3B

## BATCH FORMAT

SYNCHRONIZING
CODE          TWO-CODE WORD

| SC | CD1 | CD2 | CD3 | CD4 | CD5 | CD6 | CD7 | CD8 |

# FIG. 3C

## ADDRESS CODE WORD

| MESSAGE FLAG | | FUNCTION BITS | BCH PARITY BITS | EVEN PARITY BIT |
|---|---|---|---|---|
| 1 | 2 TO 19 | 20/21 | 22 to 31 | 32 |

# FIG. 3D

## MESSAGE CODE WORD

| MESSAGE FLAG | MESSAGE BITS | BCH PARITY BITS | EVEN PARITY BIT |
|---|---|---|---|
| 1 | 2 TO 21 | 22 to 31 | 32 |

10

# FIG. 3E

## SYNCHRONIZING CODE WORD

| BIT NO | 1 | 2 | 3 | 4 | 5 | 6 | 7 | 8 | 9 | 10 | 11 | 12 | 13 | 14 | 15 | 16 |
|--------|---|---|---|---|---|---|---|---|---|----|----|----|----|----|----|----|
| BIT | 0 | 1 | 1 | 1 | 1 | 1 | 0 | 0 | 1 | 1 | 0 | 1 | 0 | 0 | 1 | 0 |
| BIT NO | 17 | 18 | 19 | 20 | 21 | 22 | 23 | 24 | 25 | 26 | 27 | 28 | 29 | 30 | 31 | 32 |
| BIT | 0 | 0 | 0 | 1 | 0 | 1 | 0 | 1 | 1 | 1 | 0 | 1 | 1 | 0 | 0 | 0 |

# FIG. 3F

## IDLING CODE WORD

| BIT NO | 1 | 2 | 3 | 4 | 5 | 6 | 7 | 8 | 9 | 10 | 11 | 12 | 13 | 14 | 15 | 16 |
|--------|---|---|---|---|---|---|---|---|---|----|----|----|----|----|----|----|
| BIT | 0 | 1 | 1 | 1 | 1 | 0 | 1 | 0 | 1 | 0 | 0 | 0 | 1 | 0 | 0 | 1 |
| BIT NO | 17 | 18 | 19 | 20 | 21 | 22 | 23 | 24 | 25 | 26 | 27 | 28 | 29 | 30 | 31 | 32 |
| BIT | 1 | 1 | 0 | 0 | 0 | 0 | 0 | 1 | 1 | 0 | 0 | 1 | 0 | 1 | 1 | 1 |

# FIG. 4

<u>22</u>

EP 0 426 966 A2

# FIG. 5

26

| |
|---|
| MESSAGE BUFFER |
| MESSAGE REGISTER 1 |
| MESSAGE REGISTER 2 |
| MESSAGE REGISTER3 |
| MESSAGE REGISTER4 |
| ⋮ |
| MESSAGE REGISTER N |

26a

# FIG. 6

# FIG. 7

CPU

HALT — B1

RECOGNIZE RECEIVE INTERRUPTION — B2

ACQUIRE MESSAGE — B3

ACTIVATE ALARM AND START 8-SECOND TIMER — B4

B5 — RESET KEY ACCEPTED ? — YES / NO

8 SECONDS PASSED ON TIMER ? — YES / NO — B4'

B6 — TURN OFF ALARM

B7 — DISPLAY

B8 — TRANSFER DATA

ACCEPT MESSAGE KEY — B9

READ MESSAGE OR SCROLL MESSAGE DATA — B10

ACCEPT CLEAR KEY — B11

CLEAR MESSAGE DISPLAY — B12

TRANSFER CLEAR COMMAND — B12'

ACCEPT LIGHT KEY — B13

TURN ON OR OFF BACK-LIGHT — B13'

ACCEPT MODE SWITCHING KEY — B14

SET CONTROL CODE — B15

ACCEPT TRANSFER ERROR — B16

PERFORM RETRANSFER — B17

EP 0 426 966 A2

# FIG. 8

```
        ┌─────────────┐
        │   ACQUIRE    │
        │   MESSAGE    │ ──── B3
        └──────┬──────┘
               │
               ▼
        ┌─────────────┐
        │  ACQUIRE     │
        │  FUNCTION    │ ──── C1
        │  BITS        │
        └──────┬──────┘
               │
               ▼
     NO      ◇ C2
    ◄────── S - P
         INTERRUPTION
             ?
            │ YES
            ▼
        ┌─────────────┐
        │ PLACE MESSAGE│
        │ DATA  IN     │ ──── C3
        │ MESSAGE BUFFER│
        └──────┬──────┘
               │
               ▼
     NO      ◇ C4
    ◄────── END  OF
           MESSAGE
             ?
            │ YES
            ▼
        ┌─────────────┐
        │ MOVE CONTENTS│
        │ OF MESSAGE   │ ──── C5
        │ BUFFER  TO   │
        │ MESSAGE      │
        │ REGISTER     │
        └──────┬──────┘
               │
               ▼
        ┌─────────────┐
        │    E N D     │
        └─────────────┘
```

16

# FIG. 9

```
    ┌──────────────────┐
    │     DISPLAY      │─── B7
    │     PROCESS      │
    └──────────────────┘
             │
             ▼
    ┌──────────────────┐
    │  CREATE DISPLAY  │
    │  DATA IN         │─── D1
    │  DISPLAY BUFFER  │
    └──────────────────┘
             │
             ▼
    ┌──────────────────┐
    │  TRANSFER        │
    │  DISPLAY         │─── D2
    │  DATA TO         │
    │  DRIVER          │
    └──────────────────┘
             │
             ▼
    ┌──────────────────┐
    │  DISPLAY         │─── D3
    │  MESSAGE         │
    └──────────────────┘
             │
             ▼
    ┌──────────────────┐
    │      END         │
    └──────────────────┘
```

# FIG. 10A

5×7 DOT DISPLAY AREA

2 LINES OF 16 CHARACTERS EACH

# FIG. 10B

```
  1 2 3 4 5 6 7 8 9 10 11 12 13 14 15 16
1 C A L L   A G E N C Y     A . B U
2 Y E R   B , D E L I V E R Y     D
3 A T E   O F   P R O D U C T     C
```

18

# FIG. 1OC

C A L L ☐ A G E N C Y ☐ A . B U
Y E R ☐ B , D E L I V E R Y ☐ D

# FIG. 1OD

Y E R ☐ B , D E L I V E R Y ☐ D
A T E ☐ O F ☐ P R O D U C T ☐ C

# FIG. 1OE

A T E ☐ O F ☐ P R O D U C T ☐ C
☐ ☐ ☐ ☐ ☐ ☐ ☐ ☐ ☐ ☐ ☐ ☐ ☐ ☐

# FIG. 11

DATA TRANSFER — B8

CREATE DISPLAY DATA IN DISPLAY BUFFER — E1( = D1)

CONVERT SYNCHRONIZING CODE AND CONTROL CODE TO SERIAL FORMAT FOR TRANSFER — E2

CONVERT SYNCHRONIZING CODE AND CHARACTER CODE STRING TO SERIAL FORMAT FOR TRANSFER — E3

END

# FIG. 12

SYNCRONIZING
CODE

SYNCRONIZING
CODE

CONTROL
CODE

CONTROL
CODE

# FIG. 13

T      T      T      T

SYNCHRONIZING
CODE

CHARACTER
CODE
(8BITS)

# FIG. 14

| | | 6 | 5 | · · · | O |
|---|---|---|---|---|---|
| (a) | SYNCHRONIZING CODE | ROW 3, COLUMN | 3-15 | | 3-9 |

| | | O | | · · · | |
|---|---|---|---|---|---|
| (b) | SYNCHRONIZING CODE | 3-8 | 3-7 | | 3-1 |

# FIG. 15

SYNCHRONIZING CODE      CLEAR COMMAND      SYNCHRONIZING CODE      CLEAR COMMAND

# FIG. 16A

# FIG. 16B

# FIG. 17

31

PAGER    RESET    LIGHT   MESSAGE    CLEAR

CARST    TAPE    CD    FM    AM

30    4    5    6    7

① ② ③
④ ⑤ ⑥

32

# FIG. 18A

2

CALL( )( )( )

◁ ▷

○ ○ ○

○ ○ ○

▢ ▢ ▢ ▢ ▢

# FIG. 18B

2

◁ ▷

○ ○ ○

○ ○ ○

▢ ▢ ▢ ▢ ▢

# FIG. 19A

61

# FIG. 19B

61